# EUROPEAN PATENT SPECIFICATION

(11) **EP 2 151 667 B1**
(45) Date of publication and mention of the grant of the patent: **17.04.2013**
(21) Application number: 08764513.1
(22) Date of filing: 22.05.2008
(51) Int. Cl.: G06T 7/00, G01B 11/24

(54) **EQUIPMENT FOR MEASURING ABRASION OF TROLLEY WIRE BY IMAGE PROCESSING**
VORRICHTUNG ZUM MESSEN DER ABREIBUNG EINES OBERLEITUNGSDRAHTS MITTELS BILDVERARBEITUNG
ÉQUIPEMENT PERMETTANT DE MESURER L'ABRASION D'UN FIL CONDUCTEUR PAR UN TRAITEMENT D'IMAGE

(30) Priority: 25.05.2007 JP 2007138732
(43) Date of publication of application: 10.02.2010
(73) Proprietor: Meidensha Corporation, Tokyo 141-0032 (JP)
(72) Inventor: WATABE, Yusuke, Tokyo 141-0032 (JP); TANAKA, Yoriyuki, Tokyo 141-0032 (JP)
(74) Representative: Manitz, Finsterwald & Partner GbR
(86) International application number: PCT/JP2008/059440
(87) International publication number: WO 2008/146701

(56) References cited:
- WO-A1-02/21076
- JP-A- 09 159 414
- JP-A- 62 223 608
- JP-A- 2004 286 500
- JP-A- 2005 091 181
- JP-A- 2005 271 682
- JP-A- 2006 248 411
- JP-A- 2007 271 445
- JP-A- 2008 089 523
- JP-A- 2008 104 312
- BORROMEO, S., APARICIO, J.L.: "Precision of computer vision systems for real time inspection of contact wire wear in railways", SPIE, PO BOX 10 BELLINGHAM WA 98227-0010 USA, 2005, pages 18-26, XP040198690,
- TORROJA Y ET AL: "An artificial vision system used for the measurement of the overhead wire in railway applications", INDUSTRIAL ELECTRONICS, CONTROL, AND INSTRUMENTATION, 1993. PROCEEDING S OF THE IECON '93., INTERNATIONAL CONFERENCE ON MAUI, HI, USA 15-19 NOV. 1993, NEW YORK, NY, USA,IEEE, 15 November 1993 (1993-11-15), pages 1997-2002, XP010108976, DOI: DOI:10.1109/IECON.1993.339381 ISBN: 978-0-7803-0891-6

## Description

### Technical Field:

The present invention relates to an equipment for measuring abrasion of trolley wire by image processing or a trolley wire wear measuring device by image processing. More specifically, the present invention relates to a wear measuring of a trolley wire by practically using image processing, and particularly to a measuring device for measuring a width of an worn out portion of the trolley wire.

### Background Art:

The trolley wire that feeds railway electric vehicles with electric power is subjected to a sliding contact with a current collector of the vehicle each time the vehicle passes. Accordingly, with passage of time for which the railway electric vehicles run, the trolley wire is gradually worn out. Thus, if replacing is not suitably or timingly made, the trolley wire is finally broken down bringing about a trouble of the railway.
In view of the above, the trolley wire is formed with a wearing limit sign, and replacing the trolley wire is carried out by checking the wearing limit sign for the safety of railway electric vehicles.

For measuring the wear of trolley wires, there are generally two methods, one being a method in which a thickness of the trolley wire is directly measured, and the other being a method in which a width of a worn out portion of the trolley wire is calculated or derived and the calculated width of the worn portion is converted to the thickness of the trolley wire.
In the methods of directly measuring the thickness of the trolley wire, there is a method of using a measuring tool, such as slide calipas or the like. In this method, the thickness of a predetermined part of the trolley wire is manually measured by an operator with such measuring tool. In this case, exact thickness of the trolley wire is obtained. However, such manual measuring needs a troublesome work and is difficult to be automated, and thus, it is impossible to make a long distance measuring with such manual measuring.

As another method of directly measuring the thickness of the trolley wire, there is a method of using an optical sensor. In this method, a measuring device is used which comprises a roller rotatably disposed on a base, a laser emitter mounted on one end of the base and a laser receiver mounted on the other end of the base. Upon measuring, the roller is pressed against the trolley wire having a part of the trolley wire sandwiched between the laser emitter and the laser receiver, and an amount of laser received by the part of the trolley wire is detected and the detected amount of laser is converted to the thickness of the trolley wire. Although this method makes a continuous measuring possible, high speed continuous measuring is impossible due to the nature of contact of the measuring device with the trolley wire. Furthermore, due to the nature of such a construction that the trolley wire is sandwiched between the laser emitter and the laser receiver, practical usage of this method is limited to an area where no projections are provided on the trolley wire, such as point, air section, anchor or the like. If such projections become viewed during the continuous measuring, the measuring device has to be temporarily removed from the trolley wire.
In the methods of measuring the width of the worn out portion of the trolley wire, there is a method in which as is described in Japanese Laid-open Patent Application (Tokkaihei) 10-194015, measuring to a worn out portion of the trolley wire is carried out by projecting light of a sodium lamp or a laser to the worn out portion. This method was thought out by embodying a unique constructional feature of a gourd-shaped lower portion of the trolley wire in which as the trolley wire becomes worn out flatly by abrasion, the width of the worn out portion is increased. That is, by converting the width of the worn out portion, the thickness of the portion of the trolley wire is derived.

As the method of measuring the worn out portion of the trolley wire, there is a method in which a laser or a light from a light source such as a sodium lamp or the light is irradiated to a worn out portion of the trolley wire, a positional relation between the worn out portion and a line sensor of a light receiving part is accurately adjusted for receiving a regularly reflected light at the worn out portion by the line sensor, the worn out portion is imaged with the regularly reflected strong light to provide a white out image of the worn out portion and the width of the worn out portion of the trolley wire is derived or calculated from a width of the white out image of the worn out portion. Since this method is of a non-contact type, high speed measuring is possible.
However, this method tends to be easily affected by noises caused by structures such as a clamp clamping the trolley wire, structures imaged in the background and the like, and even if, because of such noises, erroneous results are unwillingly obtained, there is no way of checking the erroneous results. As a result, the worn out portion of the trolley wire has to be checked by using the afore-mentioned method in which the thickness of the trolley wire is directly measured. Furthermore, in the method, for receiving the regularly reflected light, it is necessary to accurately adjust the position of the light source and that of the light receiving device.

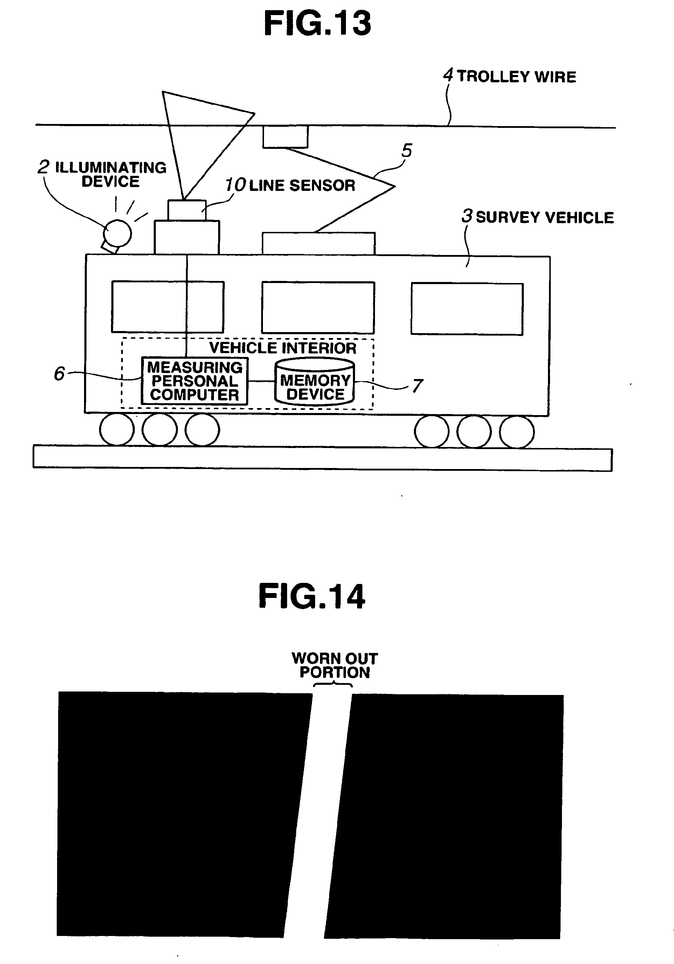

Contrary to the above-mentioned technique, there has been developed a technique in which by applying an image processing to the image provided by a line sensor, the width of the worn out portion is measured and the measured width of the worn out portion is converted to the thickness of the trolley wire (Japanese Patent Application 2006-273523: TROLLEY WIRE WEAR MEASURING DEVICE BY IMAGE PROCESSING). In this prior art technique, a long distance and continuous measuring without contact is possible while saving time.
As is shown in Fig. 13, the basic idea of the image processing used in the prior art technique is to use a line sensor 10 as an input means of the image and use a normal illuminator not a sodium lamp nor a laser.

That is, in the prior art technique, a line sensor 10 is mounted on a roof of a survey vehicle 3 in a manner to face upward rightly so that a scanning line of the line sensor 10 makes a right angle with a travelling direction in which the survey vehicle 3 runs and the scanning line crosses the trolley wire 4. On the roof of the survey vehicle 3, there is mounted a pantograph 5 that contacts the trolley wire 4. An area where the trolley wire 4 is worn out by contacting the pantograph 5 is illuminated by an illuminating device 2 and at the same time an image of the trolley wire 4 is taken by the line sensor 10.
A picture signal (or image signal) of the trolley wire 4 imaged by the line sensor 10 is inputted into a measuring personal computer 6 installed in the survey vehicle 3. In the personal computer 6, a luminance signal of the scanning line prepared by the line sensor 10 is arranged in time sequence to produce a line sensor image (or flat image) and the image is stored in a memory device 7 as an input image.

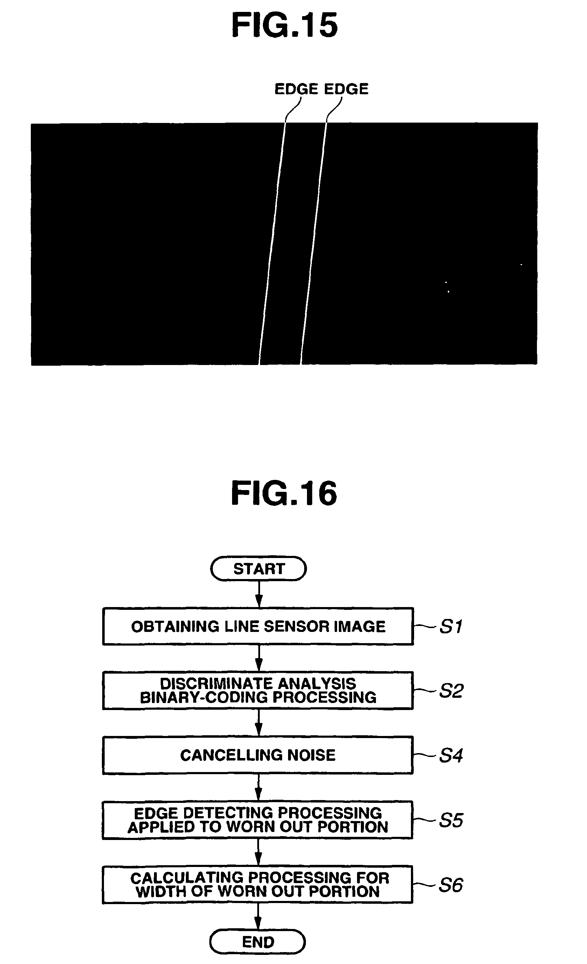

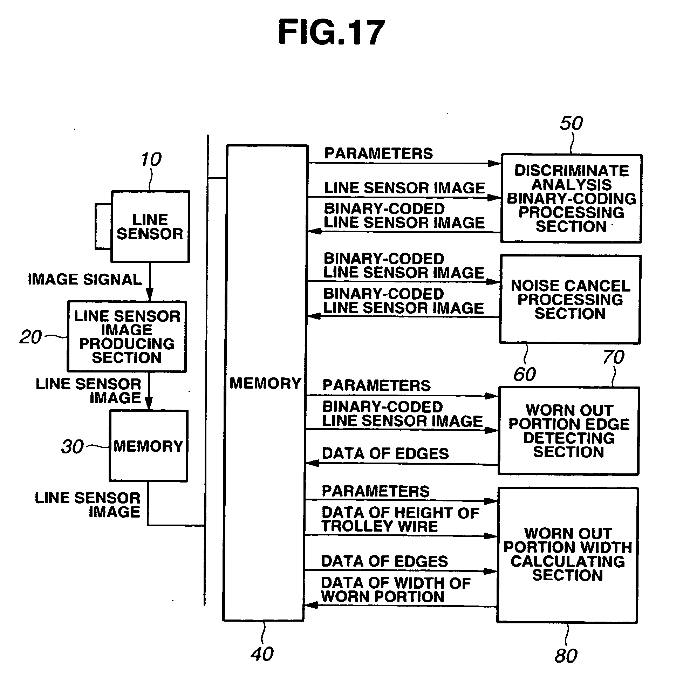

For example, as is shown in Fig. 17, the measuring personal computer 6 is a computer that comprises a line sensor image producing section 20, memories 30 and 40, a discriminate analysis binary-coding processing section (50, a noise cancelling section 60, a trolley wire worn out portion edge detecting section 70 and a trolley wire worn out portion width calculating section 80.
In accordance with programmed steps of a flowchart shown in Fig. 16, the personal computer 6 carries out an image processing on the inputted line sensor image and derives the width of the worn out portion of the trolley wire by taking the following steps.

[Obtaining the line sensor image]
First, the image signal obtained by the line sensor 10 is arranged in time sequence in the line sensor image producing section 20 and stored in the memory 30 as a line sensor image (step S1).

[Emphasis of the trolley wire worn out portion by a discriminant analysis binary-coding processing]
Then, the line sensor image is led to the discriminate analysis binary-coding processing section 50 through the memory 40 together with parameters, and in the discriminate analysis binary-coding processing section 50, a binary-coding processing is carried out (step S2). Now, the worn out portion of the trolley wire is a portion of the trolley wire that has been worn out by the pantograph, and thus, the worn out portion has a high gloss as compared with the portion that has not been worn out. Thus, also on the line sensor image, the worn out portion of the trolley wire is imaged as a strap portion with a certain luminance different from that of the background.

In the discriminate analysis binary-coding processing section 50, there is set a threshold for distinguishing the trolley wire worn out portion (the portion contacting the pantograph) from the background portion (existent structures). By using the threshold, the line sensor image is subjected to a binary-coding processing to produce a binary-coded line sensor image with the worn out portion emphasized.
As is seen from Fig. 14, the binary-coded line sensor image comprises a white region that represents the worn out potion of the trolley wire and a black region that represents the background.
Furthermore, in the discriminate analysis binary-coding processing section 50, a discriminate analysis binary-coding processing is practically used for dealing with a displacement of the trolley wire and a difference in intensity of the reflected light.

"Discriminate analysis binary-coding processing" is a processing for determining a threshold in accordance with the image. That is, in a histogram of each image, there are blocks (which will be referred to "classes" hereinafter) of pixels collected with a luminance with a certain range. When the binary-coding is practically carried out, processing is so made that a variance ratio between an inner class variance and an inter class variation shows the maximum value for determining a threshold advantageously usable for every image.
Accordingly, undesired matter wherein once the threshold has a fixed value, emphasis and sampling of portions other than the worn out portion of the trolley wire and/or sampling of the worn out portion is not made depending on the circumstance at the time when images are being produced is solved.

[Removing noises from the binary-coded line sensor image]
When a binary-coded line sensor image is produced from the line sensor image through the binary-coding processing, the line sensor image thus produced tends to have a plurality of scattered noises thereon due to presence of flaw of the worn out portion of the trolley wire and condition of the background.
In view of the above, when the binary-coded line sensor image is led to the noise canceling section 60 through the memory 40, the nose canceling section 60 carries out an expansion/contraction processing to cancel or remove the noises (step S4).

[Edge detection applied to the worn out portion of the trolley wire]
When then the binary-coded line sensor image with the noises removed is led to the trolley wire worn out portion edge detecting section 70 together with parameters through the memory 40, the trolley wire worn out portion edge detecting section 70 detects opposed edges of the worn out portion of the trolley wire that are shown in the white region on the binary-coded line sensor image (step S5).

For detecting the opposed edges, the following method is employable. That is, if searching is carried out to a certain line from the left, a point where the black region of the background changes to the white region of the worn out portion can be detected as a left side edge of the worn out portion and another point where the white region of the worn out potion changes to the black region of the background can be detected as a right side of the worn out portion.
By carrying out the above-mentioned searching for every line on the image from the top to the bottom, edges of the worn out portion of the trolley wire shown on one binary-coded line sensor image are detected as is seen from Fig. 15.

[Calculation of the width of the worn out portion of the trolley wire]
The data of the opposed edges of the worn out portion of the trolley wire that are detected from the binary-coded line sensor image is led to the trolley wire worn out portion width calculating section 80 together with parameters and data of the height of the trolley wire through the memory 40, and the trolley wire worn out portion width calculating section 80 calculates a distance between the opposed edges on one scanning line of the line sensor 10 as an imaged width of the worn out portion of the trolley wire (step S6).

That is, from a distance (or height) from the line sensor 10 to the trolley wire 4, the focal length of the lens, the width of the sensor and the number of pixels of the sensor, an image resolution (mm/pix) that is a rate of an actual dimension (mm) relative to one pixel (pix) is calculated, and by multiplying the imaged width of the worn portion of the trolley wire and the image resolution together, an actual width of the worn portion of the trolley wire is obtained.
The distance (or height) from the line sensor 10 to the trolley line 4, that is used for the calculation, is obtained from data that is obtained from a suitable means that has been proposed by the applicant before.

Data of the edges, the worn portion of the trolley wire, the line sensor image used for the calculation and corresponding line numbers is stored.
Since, as is described hereinabove, the previously proposed trolley wire wear measuring device by image processing is of a non-contact type, high speed measuring is possible and thus a long distance can be measured in a short time.

Furthermore, due to the nature of the construction of the device, the sensor is mounted on a position that is remote from the existing structures such as point, air section and anchor, and thus, as compared with the measuring method in which the thickness of the trolley wire is directly measured by using a roller and an optical sensor, it is unnecessary to worry about a possibility of collision with the existing structures, and thus production of the line sensor image is possible in substantially all zone of the trolley wire, and thus, image data of the trolley wire and existing structures located near the trolley wire in a measuring zone can be obtained.

Furthermore, there is no need of using a specified lighting and there is no difficulty in handling the device of the invention unlike in case of a measuring device that uses a laser that may affect human body. Furthermore, there is no need of making precise positioning between the light source and the light receiving device.
Furthermore, in every imaging circumstance, calculation of a suitable threshold is automatically achieved, and undesired matter wherein sampling of the trolley wire can not be effected due to low luminance, that would occur when the threshold is fixed, is suppressed. Furthermore, since the line sensor image is stored as a data, checking the reasons is possible by watching the image of the worn out portion if problem occurs in measuring the worn out portion of the trolley wire.
A further method of optically detecting the abrasion of a trolley wire is described in WO 02/21076 A1. This method relies on the rule of Scheimpflug in order to fine focus the imaging in spite of varying heights of the trolley wire.

### SUMMARY OF THE INVENTION

For measuring the worn out portion of a trolley wire, there are various methods, which are for example a method in which the thickness of the trolley wire is directly measured by a slide calipas, a method in which the thickness of the trolley wire is directly measured by an optical sensor, a method in which the width of the worn out portion of the trolley wire is measured by projecting a light of a sodium lamp or a laser and the thickness of the trolley wire is derived from the measured width by using a conversion technique and a method in which the worn out portion of the trolley wire is measured by an image processing technique which has been previously proposed by the same applicants. Drawbacks possessed by the method in which the worn out portion is measured by the image processing technique will be described in the following.

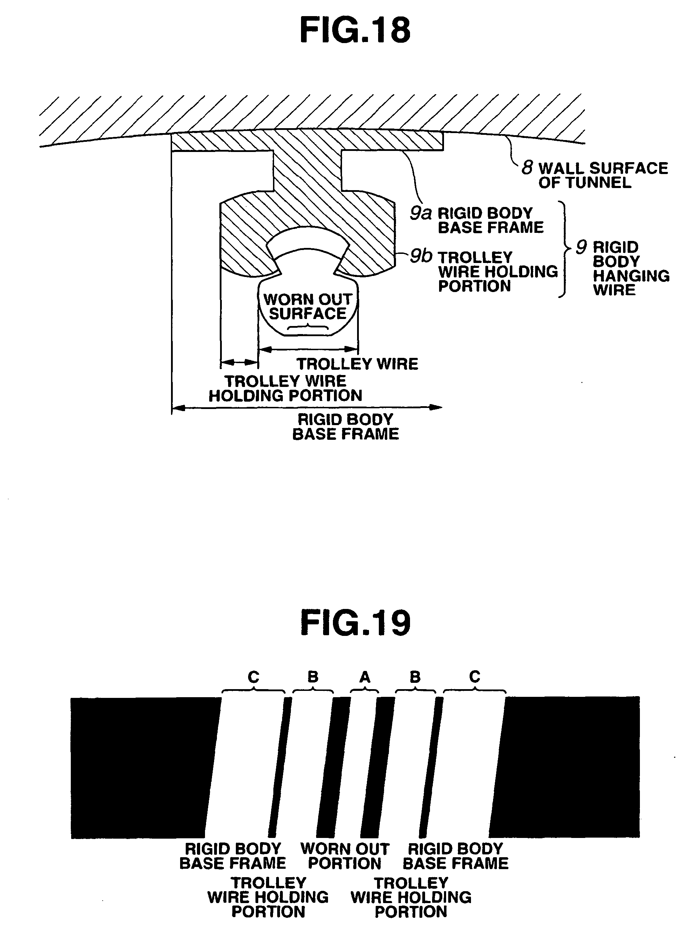

(1) The method by using the image processing technique has such a week point as to misidentify noises (imaged structures) as the trolley wire. That is, for hanging the trolley wire from a trolley wire pole, there are several ways. The most typical one is a catenary system in which the trolley wire to which pantograph contacts is hung from a hanging wire through metal rods called hungers. The other one is a rigid body stringing system mainly used in a subway in which, as is shown in Fig. 18, the trolley wire 4 is directly fixed to a rigid body (or rigid body hanging wire) 9 that is connected to a wall surface 8 of a tunnel. The rigid body hanging wire 9 is produced by coupling a rigid body base frame 9a fixed to the tunnel wall surface 8 with a rigid body supporting portion (which will be referred to a trolley wire holding portion in the following) 9b that supports the trolley wire 4.

When an image data of the trolley wire in catenary system is subjected to a binary-coding processing in the trolley wire wear measuring method based on the image processing technique which has been proposed by the same applicants, the worn out portion of the trolley wire is shown by white region as is seen from Fig. 14, and the background (viz., the portion of the trolley wire that is not worn out) is shown by black region.
However, in case of the rigid body stringing system, there extend the rigid body base frame 9a and the trolley wire holding portion 9b in parallel with the trolley wire 4, and when these structures are made of metals that reflect light, as is shown by Fig. 19, the worn out portion of the trolley wire is shown by white region "A", and also light reflecting portions of the rigid body base frame 9a and the trolley wire holding portion 9b are shown by white regions "B" and "C", and a background portion (which includes a portion of the trolley wire that is not worn out) is shown by black region. Accordingly, at the time of sampling of the worn out portion of the trolley wire, the worn out portion of the trolley wire 4 and the light reflecting portion can not be distinguished.

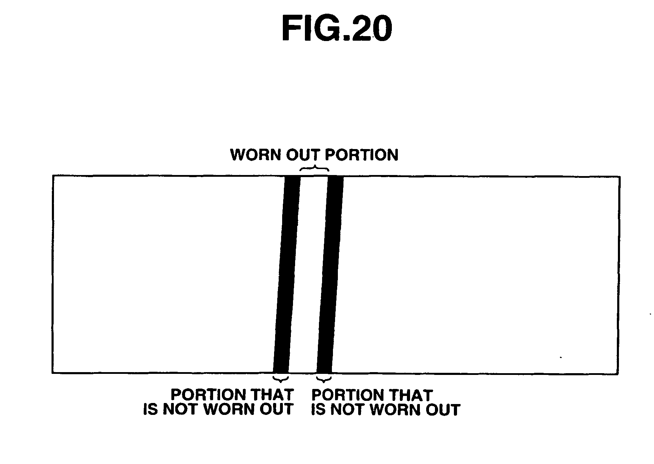

(2) In the image processing used in the trolley wire wear measuring previously proposed by the same applicants, when the image is taken in night time, application of the binary-coding processing to the image data results in that the background is shown by black region. However, when imaging is taken in day time, only the portion of the trolley wire 4 that is not worn out is shown by black region, and the background and the worn out portion are shown by white regions, as is shown in Fig. 20. For sampling the worn out portion of the trolley wire 4, it is necessary to cause the only the worn out portion of the trolley wire 4 to be shown by white region and cause the background to be shown by black region.
It is an object of the invention to provide a trolley wire wear measuring device which overcomes the afore-mentioned drawbacks.
This object is satisfied by the subject matter of claim 1.

In order to achieve the above-mentioned task, the trolley wire wear measuring device as defined in Claim 1 of the present invention comprises means that produces a line sensor image by using a line sensor and storing the produced line sensor image as an input image; means that applies a discrimination analysis binary-coding processing to the line sensor image to produce a binary-coded line sensor image that emphasizes a worn out portion of a trolley wire; means that cancels noises from the binary-coded line sensor image; means that detects edges of the worn out portion of the trolley wire from the binary-coded line sensor image that has been subjected to the noise canceling; and means that calculates a distance between the edges of the worn out portion of the trolley wire and determines the calculated distance as a width of the worn out portion of the trolley wire, which is characterized by further adding means by which, by previously setting the type of the trolley wire, an image resolution [mm/pix], which is the ratio of actual dimension [mm] to a pixel [pix], is calculated, for each line unit whose image is to be analyzed, from the maximum width of the trolley wire, a height from the line sensor to the trolley wire, a focal length of the lens, the width of the sensor and the number of pixels of the sensor, and a white region in the line sensor image that has pixels that are greater than those corresponding to the maximum width of the trolley wire is converted to a black region.

In order to achieve the above-mentioned task, the trolley wire wear measuring device as defined in Claim 2 of the present invention is a device as defined in Claim 1, which is characterized by further adding means by which a pattern constituted by both the worn out portion of the trolley wire and a rigid body portion sampled as a white region on the binary-coded line sensor image is previously registered as one unit and the worn out portion of the trolley wire is identified from a position of the worn out portion of the trolley wire that has been registered for each unit.

In order to achieve the above-mentioned task, the trolley wire wear measuring device as defined in Claim 3 of the present invention is a device as defined in Claim 2, which is characterized by further adding means by which when the number of the white regions sampled from the binary-coded line sensor image is different from a multiple of the number of the units that have been previously registered, a threshold used in the discrimination analysis binary-coding processing is stepwisely readjusted.

In order to achieve the above-mentioned task, the trolley wire wear measuring device as defined in Claim 4 of the present invention is a device as defined in Claim 1, 2 or 3, processing, as claimed in Claim 1, 2 or 3, which is characterized by further adding means by which the white regions sampled from the binary-coded line sensor image are entirely converted to the width of the worn out portion, the converted width of the worn out portion is compared with a previously registered detecting width of the rigid body portion, and based on the comparison results, the white regions having an worn out portion that closely corresponds to the rigid body detecting width is recognized as the rigid body portion and the width of the worn out portion on the white regions other than the white portions recognized as the rigid body portion is recognized as the width of the worn out portion of the trolley wire.

Advantages of the invention will be described in the following.
(1) According to the trolley wire wear measuring device by image processing as defined in Claim 1 of the invention, the following advantages are expected.

(a) In the trolley wire wear measuring device by image processing, in the data produced by subjecting an image taken in day time to binary-coding processing, the region showing the background can be converted from white region to black region, so that there is produced an image construction (background=black region, worn out portion=white region) that is the same as that produced from the data produced by subjecting an image taken in night time to binary-coding processing. Thus, even in the image taken in day time, the width of the worn out portion of the trolley wire can be measured by using the trolley wire wear measuring device by image processing.

(b) In the trolley wire wear measuring device by image processing, in the data produced by subjecting an image of a trolley wire of a rigid body stringing system to binary-coding processing, the region showing the rigid body portion is converted from white region to black region, so that there is produced an image construction (background=black region, the worn out portion=white region) that is the same as that produced from the data produced by subjecting an image of the trolley wire of a catenary system to binary-coding processing. Thus, even in the image data of the trolley wire of the rigid body stringing system, the width of the worn out portion of the trolley wire can be measured by using the trolley wire wear measuring device by image processing.

(2) According to the trolley wire wear measuring device by image processing as defined in Claim 2, in case wherein after the processing mentioned in Claim 1, both the worn out portion of the trolley wire and the rigid body portion are provided, the unit construction of the rigid body portion and the trolley wire and the position of the worn out portion of the trolley wire are registered in the device, and from the trolley wire worn out portion and the rigid body portion sampled from the image data subjected to the binary-coding processing, only the trolley wire worn out portion is extracted, and thus, without suffering from an erroneous detection, the width of the worn portion of the trolley wire can be measured by the trolley wire wear measuring device by image processing.

(3) According to the trolley wire wear measuring device by image processing as defined in Claim 3, in addition to the advantages expected from the invention of Claim 2, the following advantages are obtained. That is, even in case wherein due to soil or rust gathering on the rigid body portion, the rigid body portion can not be detected and thus the rigid body portion and the trolley wire fail to constitute the registered unit, the threshold is stepwisey adjusted in such a manner that the rigid body portion that would be shown by black region on the image data that has been subjected to binary-coding processing is shown by white region and thus a previously registered construction is provided as a unit of the rigid body portion and the trolley wire. With this, only the worn out portion of the trolley wire is extracted or due to adjustment of the threshold, the width of white region of the worn out portion of the trolley wire that has become larger than the original width is corrected causing the width of the worn out portion to become the original width of the worn out portion. With this, the width of the worn out portion of the trolley wire can be measured by the trolley wire wear measuring device by image processing.

(4) According to the trolley wire wear measuring device by image processing as defined in Claim 4, in case wherein due to soil or rust gathering on the rigid body portion, the rigid body portion can not be detected and even when Claim 3 is carried out, the rigid body portion and the trolley wire fail to constitute the previously registered construction, by practically using a fact in which the rigid body portion is not a member that is to be worn out and thus the width is kept unchanged, the continuous white regions of nominated worn out portions sampled (which includes continuous white regions of the ridge body portion) are entirely converted to the width of the worn out portion, and the converted width of the worn out portion is compared with a previously registered rigid body portion detecting width for each identical line of the continuous white regions. Based on the compared results, a continuous white region having the width of the worn out portion that closely corresponds to the rigid body portion detecting width is recognized as the rigid body portion, and the width of the worn out portion of another continuous white region that is not recognized as the rigid body portion is determined as the width of the worn out portion of the trolley wire. With this, the width of the worn out portion of the trolley wire can be measured by using the trolley wire wear measuring device by image procession.

### BRIEF DESCRIPTION OF THE DRAWINGS

Fig. 1 is a flowchart showing operation steps taken by a trolley wire wear measuring device of a first embodiment of the present invention.
Fig. 2 is a block diagram of the trolley wire wear measuring device of the first embodiment of the present invention.
Fig. 3 is an illustration showing a result of an example in which a noise cancel processing is applied to a portion that is not worn out.
Fig. 4 is a flowchart showing operation steps taken by a trolley wire wear measuring device of a second embodiment of the present invention.
Fig. 5 is a block diagram of the trolley wire wear measuring device of the second embodiment of the present invention.
Fig. 6 is an illustration showing an example in which a trolley wire holding portion that is narrower than the maximum width of the trolley wire is left shown by white region, not converted to black region.
Fig. 7 is an illustration showing an image data of a switch portion of the trolley wire.
Fig. 8 is a flowchart showing operation steps taken by a trolley wire wear measuring device of a third embodiment of the present invention.
Fig. 9 is a block diagram of the trolley wire wear measuring device of the third embodiment of the present invention.
Fig. 10 is an illustration showing an example in which a part of a rigid body is not shown by white region due to soil gathering on the rigid body.
Fig. 11 is a flowchart showing operation steps taken by a trolley wire wear measuring device of a fourth embodiment of the present invention.
Fig. 12 is a block diagram of the trolley wire wear measuring device of the fourth embodiment of the present invention.
Fig. 13 is a schematic view showing an exemplified arrangement of a line sensor of a trolley wire wear measuring device.
Fig. 14 is an illustration showing an example of a binary-coded line sensor image of a worn out portion of the trolley wire.
Fig. 15 is an illustration showing an example in which edges of the worn out portion of the trolley wire are detected.
Fig. 16 is a flowchart showing operation steps taken by a prior art trolley wire wear measuring device.
Fig. 17 is a block diagram of the prior art trolley wire wear measuring device.
Fig. 18 is a schematic view of a rigid body stringing system.
Fig. 19 is an illustration showing an example in which a worn out portion of a trolley wire used in the rigid body stringing system is detected.
Fig. 20 is an illustration showing an example in which a worn out portion of a trolley wire, that is taken into image data taken in day time, is detected.

### BEST MODES FOR CARRYING OUT THE INVENTION

In following, embodiments of the present invention will be described. In each embodiment, an improved noise canceling means is used in a trolley wire wear measuring device by image processing, so that a detecting accuracy to a worn out portion of the trolley wire is increased.

### FIRST EMBODIMENT

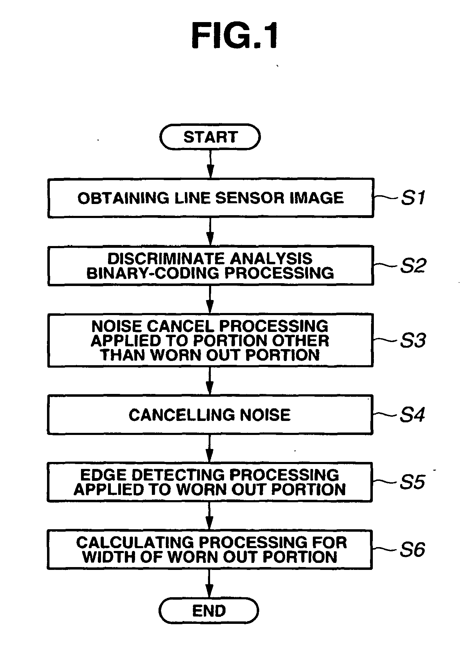

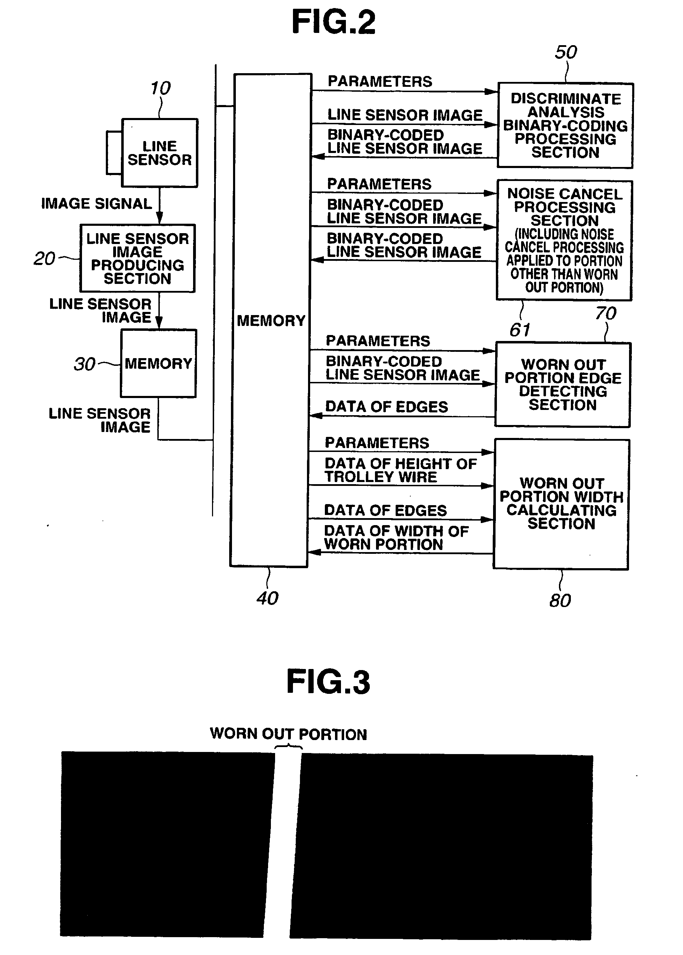

(1) First embodiment
A trolley wire wear measuring device by image processing of a first embodiment of the present invention is shown in Figs. 1 and 2. Fig. 1 shows a flowchart and Fig. 2 shows a block diagram of the device.
In this embodiment, as is shown in Fig. 2, in place of the noise canceling section 60 used in the above-mentioned trolley wire wear measuring device of the prior art, there is used a noise cancel processing section 61 that effects a noise canceling of a portion other than the worn out portion in addition to the noise cancelling of the worn out portion.

That is, as is shown in Fig. 2, when a binary-coded line sensor image is led to the noise cancel processing section 61 through the memory 40, the noise cancel processing section 61, as is seen from Fig. 1, carries out a noise canceling process to a portion other than the worn out portion (step S3) prior to the noise canceling step at step S4.
Now, it is to be noted that "noise canceling process to a portion other than the worn out portion" is a process in which white region having pixels greater than those corresponding to the maximum width of the trolley wire in the line is converted to black region.

For example, prior to the process of analyzing the image, setting is so made that a type of the trolley wire is derived, and then, for each line to which the image analysis is applied, from the maximum width of the trolley wire, the height (or distance) from the line sensor to the trolley wire, the focal length of the lens, the width of the sensor and the number of pixels of the sensor, an image resolution (mm/pix) that is a rate of an actual dimension (mm) relative to one pixel (pix) is calculated, and white region having pixels greater than those corresponding to the maximum width of the trolley wire in each line is converted to black region.
Accordingly, also in case wherein a trolley wire of a rigid body stringing system is imaged, the rigid body portion in the binary-coded line sensor image is converted from white region to black region as is shown in Fig. 3, which has the same image construction (viz., background=black region, worn out portion=white region) as that in case of the catenary system.

Accordingly, by applying an image processing to an image data provided when the trolley wire of the rigid body stringing system is imaged, the worn out portion of the trolley wire can be measured.
Furthermore, even when the image of the trolley wire is taken in day time, the background in the binary-coded line sensor image is converted from white region to black region as is shown in Fig. 3, which has the same image construction (viz., background=black region, worn out portion=white region) as that in case wherein the image of the trolley wire is taken in night time.

Thus, even when the data is based on an image taken in day time, the width of the worn out portion of a trolley wire can be measured by the trolley wire wear measuring device by image processing of the invention.
As is described hereinabove, in the embodiment, in the noise cancel processing section 60, there is carried out a noise processing which includes a noise canceling process applied to a portion other than the worn out portion. Accordingly, noise in the background of the image taken in day time and noise in the rigid body portion can be removed.

It is to be noted that construction and processing other than the above-mentioned construction and processing are the same as those shown in Figs. 16 and 17, and similar operation is carried out. The maximum width of the trolley wire is defined by the type of trolley wire that is ruled by JIS (viz., Japanese Industrial Standard).

### SECOND EMBODIMENT

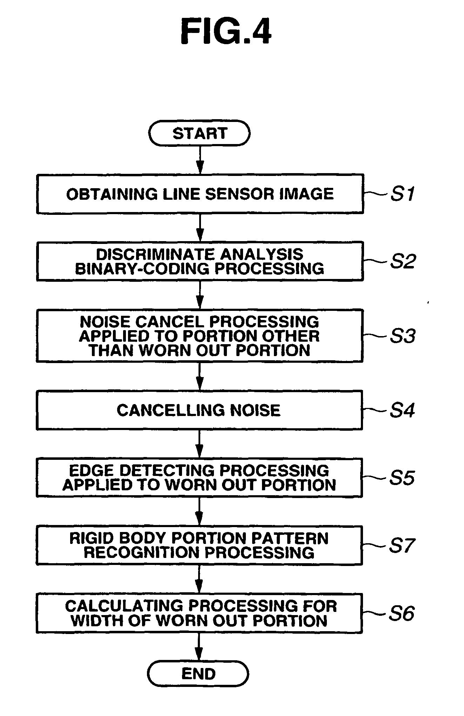

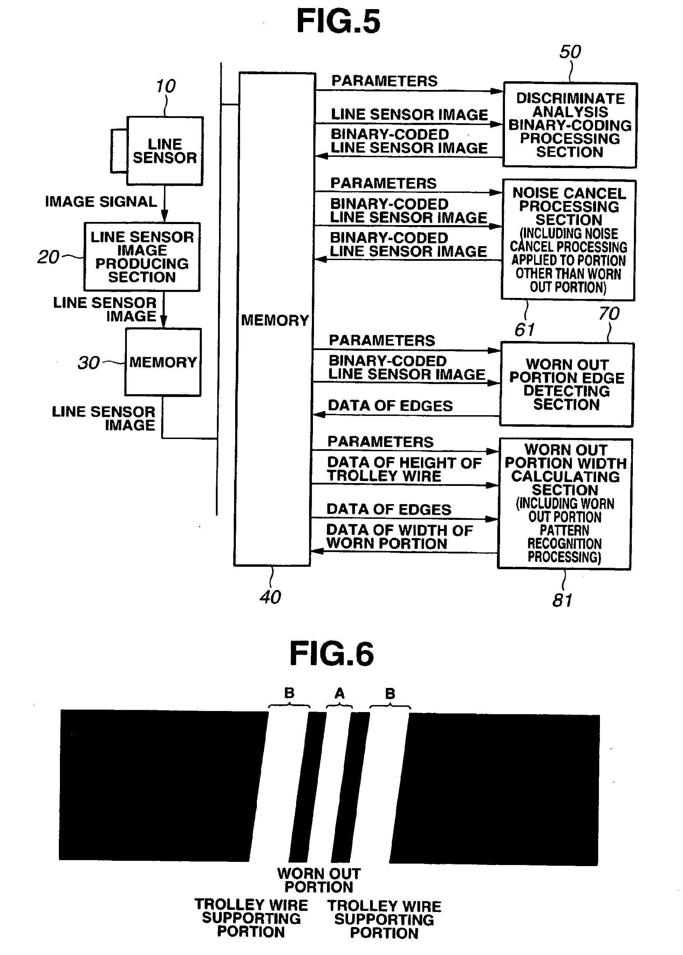

(2) Second embodiment
A trolley wire wear measuring device by image processing of a second embodiment of the present invention is shown in Figs. 4 and 5. Fig. 4 shows a flowchart and Fig. 5 shows a block diagram of the device.
In this second embodiment, as is shown in Fig. 5, in place of the above-mentioned trolley wire worn out portion width calculating section 80 used in the first embodiment, there is used a trolley wire worn out portion width calculating section 81 that effects a rigid body pattern recognition processing in addition to the function of the section 80.

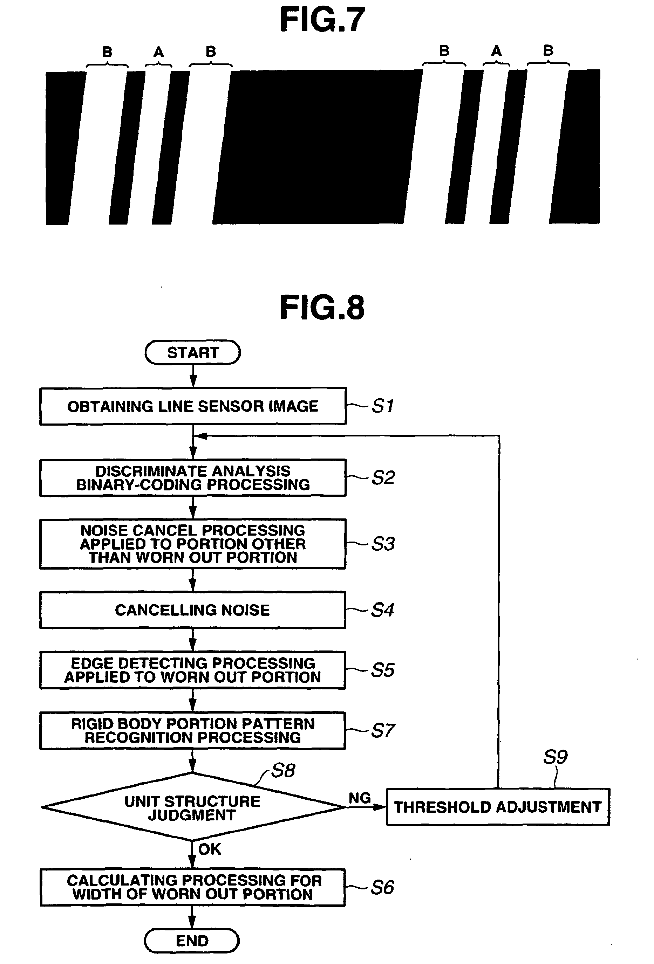

That is, as is shown in Fig. 5, when the data on the both edges of the worn out portion of the trolley wire, that is obtained from the binary-coded line sensor image, is led through the memory 40 to the trolley wire worn out portion width calculating section 80 together with parameters and the data of the height of the trolley wire, the trolley wire worn out portion width calculating section 80 carries out, as is seen from Fig. 7, a rigid body portion pattern recognizing processing (step S7) prior to effecting calculation of the width of the worn out portion of the trolley wire at step S6.
It is to be noted that the rigid body portion pattern recognizing processing is a processing in which a pattern on the binary-coded line sensor image, that is constituted by the worn out portion of the trolley wire and the rigid body portion, is registered as one unit in advance, the worn out portion of the trolley wire is identified from the position of the trolley wire worn out portion registered for each unit.

That is, in the rigid body portion pattern recognizing processing, the pattern constituted by both the worn out portion of the trolley wire and the rigid body portion is registered at first by using a fact in which in case of the trolley wire of the rigid body stringing system, both the worn out portion of the trolley wire and the rigid body portion are detected as white region entirely on the binary-coded line sensor image.
For example, if the imaging is so made on the binary-coded line sensor image, the rigid body portion, the worn out portion of the trolley wire and the rigid body portion are shown from the left, these portions are registered as a pattern that has three continuous white regions per each unit. In this case, the second continuous white region from the left is registered as a worn out portion.

For facilitation of explanation, the continuous region recognized by the image processing applied to the rigid body stringing system is explained as having the rigid body portion, the worn out portion of the trolley wire and the rigid body portion arranged from the left side. However, depending a construction of the rigid base used in the rigid body stringing system, the position of the worn out portion of the trolley wire and the number of rigid body portion change.
Then, after the rigid body pattern recognition processing, in the trolley wire worn out portion width calculating section 81, there is carried out calculation of the width of the worn out portion in accordance with the pattern registration recognizing that, in the above-mentioned example, only the second continuous white region is the worn out portion (step S6).

With the above-mentioned processing, by sampling only the worn out portion of the trolley wire from the binary-coded image, the width of the worn out portion can be calculated.
In case wherein a portion such as the trolley wire holding portion or the like is small as compared with the maximum width of the trolley wire wherein the entire range of the rigid body portion is not removed, the present embodiment is effective.
For example, when the rigid body base frame extending in parallel with the trolley wire has a width larger than the maximum width of the trolley wire, changing or conversion from white region to black region is effected in the rigid body base frame as is seen from Fig. 6. However, when the trolley wire holding portion has a width smaller than the maximum width of the trolley wire, such changing or conversion is not effected. That is, the trolley wire holding portion is kept shown by white region "B".

In the embodiment, in advance, the worn out portion is registered as the second continuous white region "A" from the left, and thus, the width of the worn out portion can be carried out processing that only the second continuous white region "A" is the worn out portion.
Furthermore, in the embodiment, as is understood from Fig. 7, also in case of the imaged data of the switch portion of the trolley wire, it is possible to sample the continuous white region of the worn out portion of each unit of a plurality of trolley wires.

In the above-mentioned example, the three continuous white regions are registered as one unit, and thus, the second white region from the left (viz., the second white region of the first unit that includes first, second and third continuous white regions) and the fifth white region from the left (viz., the second white region of the second unit that includes fourth, fifth and sixth continuous white regions) are sampled as the worn out portion. The direction in which the continuous white regions are counted depends on a direction in which during the time of image processing the line is searching.
Construction and processing other than the above-mentioned ones are substantially the same as those of the above-mentioned first embodiment and thus, similar operation is carried out.

### THIRD EMBODIMENT

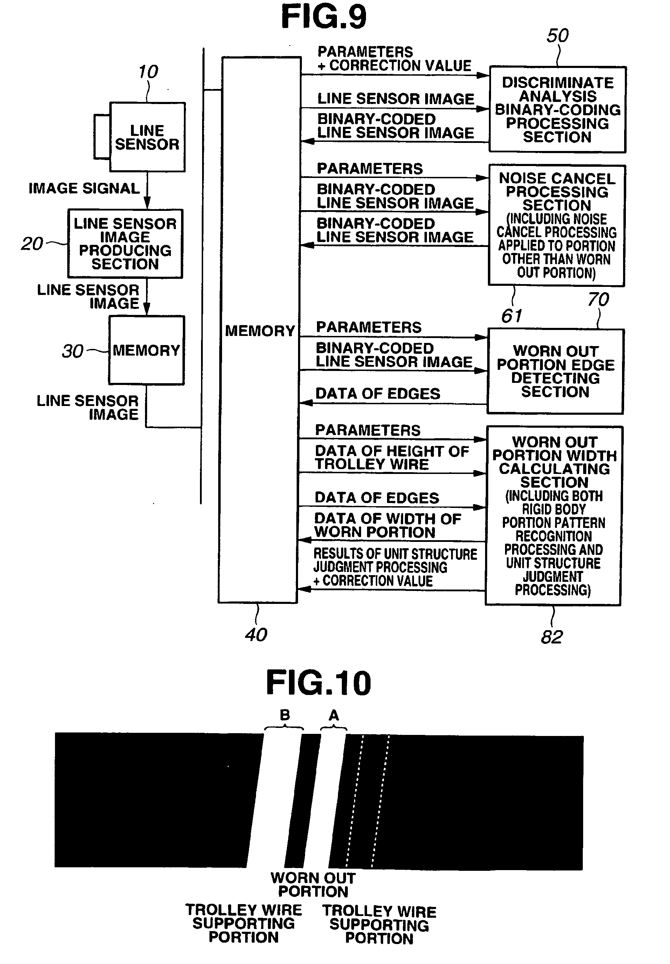

(3) Third embodiment
A trolley wire wear measuring device by image processing of a third embodiment of the present invention is shown in Figs. 8 and 9. Fig. 8 shows a flowchart and Fig. 9 shows a block diagram of the device.
In this third embodiment, as is shown in Fig. 9, in place of the above-mentioned trolley wire worn out portion width calculating section 80 used in the first embodiment, there is used a trolley wire worn out portion width calculating section 82 that effects the rigid body pattern recognition processing and a unit type judging processing in addition to the function of the section 80.

That is, as is shown in Fig. 9, when the data of the both edges of the worn out portion of the trolley wire, that is obtained from the binary-coded line sensor image, is led through the memory 40 to the trolley wire worn out portion width calculating section 82 together with parameters and the data of the height of the trolley wire, the trolley wire worn out portion width calculating section 82 carries out, as is seen from Fig. 8, after effecting the rigid body portion pattern recognizing processing (step S7), a unit structure judging processing (step S8) prior to effecting calculation of the width of the worn out portion of the trolley wire at step S6.
It is to be noted that the unit structure judging processing is a processing in which when the number of the continuous white regions on the binary-coded line sensor image is not a multiple of the number of the unit structure provided by the rigid body portion pattern recognizing processing, the threshold of the discrimination analysis binary-coding processing is stepwisely readjusted to enforcedly induce recognition of the rigid body portion.

Between a rigid body portion of the rigid body stringing system that has been built lately and a rigid body portion of the rigid body stringing portion that was built several years ago, there is a difference in reflectance at a metal surface. Furthermore, since the rigid body portion is not a member that is worn by the pantograph like the trolley wire, the rigid body portion is gradually soiled and finally the rigid body portion becomes to fail to have a satisfied reflex action.
Thus, in the embodiment, when, in the rigid body pattern recognition processing, the number of the continuous white regions on the binary-coded line sensor image fails to show the previously registered multiple of the number of the unit structure, the unit structure judgment is made NG (No Good) and the threshold of the discrimination analysis binary-coding processing is adjusted (step S9).

After adjustment of the threshold at step S9, the steps from the discrimination analysis binary-coding processing (step S2) are repeated until the time when the number of the continuous white regions on the binary-coded line sensor image becomes matched with the previously registered multiple of the number of unit structure, that is, by the time when the unit structure judgment issues OK.
It is to be noted that the threshold adjustment at step S9 is a processing wherein a suitable threshold derived at the discrimination analysis binary-coding processing is enforcedly changed or corrected and the correction level is stepwisely increased depending on the number of retrying.

In such case, it tends to occur that due to the enforcing process applied to the rigid body portion, the width of the continuous white region (viz., width of the worn out portion) of the worn out portion becomes larger than the suitable value. Thus, if desired, depending on the stepwise adjustment of the threshold, the width of the white region of the worn out portion of the trolley wire, that has been increased by the adjustment of the threshold, may be corrected so that the width is returned to the original width of the worn out portion.
Construction and processing other than the above-mentioned ones are substantially the same as those of the above-mentioned second embodiment and thus, similar operation is carried out.

### FOURTH EMBODIMENT

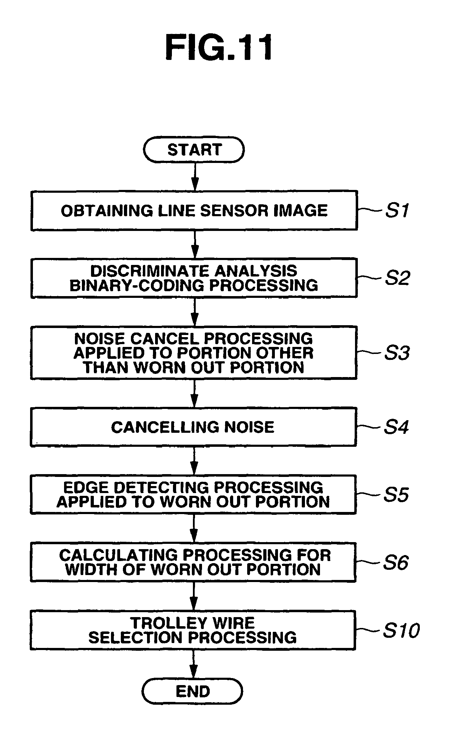

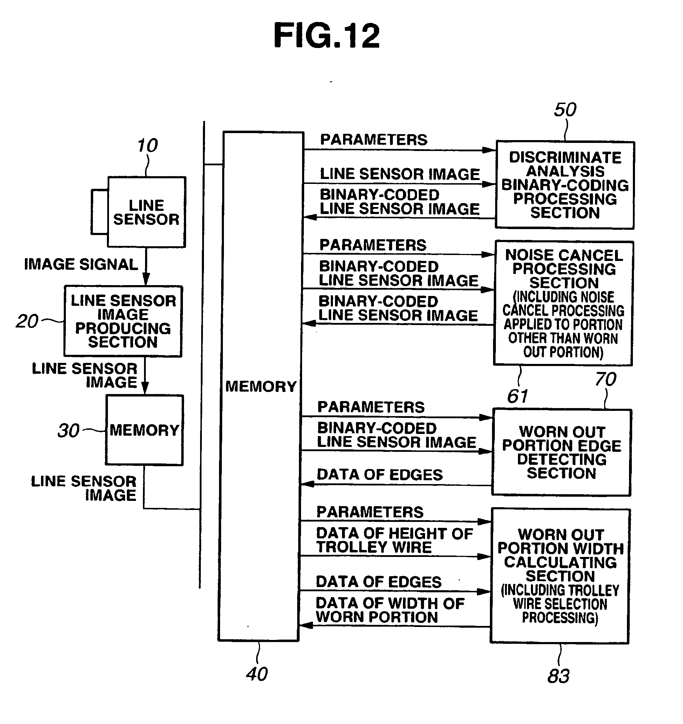

(4) Fourth embodiment
A trolley wire wear measuring device by image processing of a fourth embodiment of the present invention is shown in Figs. 11 and 12. Fig. 11 shows a flowchart and Fig. 12 shows a block diagram of the device.
In this embodiment, as is seen from Fig. 12, in place of the above-mentioned trolley wire worn out portion width calculating section 80 used in the first embodiment, there is used a trolley wire worn out portion width calculating section 82 that effects a trolley wire selection processing in addition to the function of the section 80.

That is, as is shown in Fig. 12, when the data of the both edges of the worn out portion of the trolley wire, that is obtained from the binary-coded line sensor image, is led through the memory 40 to the trolley wire worn out portion width calculating section 83 together with parameters and the data of the height of the trolley wire, the trolley wire worn out portion width calculating section 83 carries out, as is seen from Fig. 11, after effecting calculation of the width of the worn out portion of the trolley wire at step S6, the trolley wire selection processing (step S10).
It is to be noted that the trolley wire selection processing is a processing in which the continuous white regions of nominated worn out portions sampled (which includes continuous white regions of the ridge body portion) are entirely converted to the width of the worn out portion, and the converted width of the worn out portion is compared with a previously registered rigid body portion detecting width for each identical line of the continuous white regions, and based on the compared results, a continuous white region having the width of the worn out portion that closely corresponds to the rigid body portion detecting width is recognized as the rigid body portion, and the width of the worn out portion of another continuous white region that is not recognized as the rigid body portion is determined as the width of the worn out portion of the trolley wire.

In case of the rigid body portion of the rigid body stringing system that has several years from building thereof, it tends to occur that as is seen from Fig. 10, either one of right and left trolley wire holding portions is not sampled, which is different from the case of Fig. 6 in which both supporting portions are sampled.
In such case, the nominated worn out portion of the trolley wire is not matched with the number of unit structure, and thus, the width of the worn out portion of all sampled continuous white regions (viz., worn out portion and rigid body portion) is calculated, and based on the result of the calculation, the value of the continuous white region that is considered as a reasonable value is adopted or selected.

As is seen from Fig. 7, considering the imaged data at the switching portion of the trolley wire, if the white regions are parted from each other by a distance greater than the maximum width (actually, the number of pixels corresponding to the width) of the trolley wire on the common line, judgment is so made that the white regions constitute different units.
In the following, the method of recognizing a rigid body portion and a worn out portion of the trolley wire from a detected continuous white region that includes the rigid body portion and the worn out portion of the trolley wire will be described. The operation for the recognition is carried out for each unit.

(a) The rigid body portion detecting width is registered in advance.
(b) Considering that the rigid body supporting portion and rigid body base frame are not members that are to be worn out and thus the width of them is kept unchanged, judgment is so carried out as to which one of the continuous white regions has a width that is closest to that of the registered rigid body portion detecting width on each line. Based on the results, a portion including a continuous white region that has a width closest to the detecting width is recognized as the rigid body portion, and another portion including a continuous white region that is not recognized as the rigid body portion is recognized as the worn out portion of the trolley wire.

Construction and processing other than the above-mentioned ones are substantially the same as those of the first embodiment and thus, similar operation is carried out.

## Claims

1. A trolley wire wear measuring device by image processing, comprising:
a means (20) that produces a line sensor image by using a line sensor (10) and storing the produced line sensor image as an input image;
a means (50) that applies a discrimination analysis binary-coding processing to the line sensor image to produce a binary-coded line sensor image in which a white region represents a worn out portion of a trolley wire (4) and a black region represents background;
a means (61) that cancels noises from the binary-coded line sensor image;
a means (70) that detects edges of the worn out portion of the trolley wire from the binary-coded line sensor image that has been subjected to the noise canceling; and
a means (80; 81; 82; 83) that calculates a distance between the edges of the worn out portion of the trolley wire (4) and determines the calculated distance as a width of the worn out portion of the trolley wire (4),
further comprising a means (61) that calculates for each line unit whose image is to be analyzed an image resolution, i.e. the ratio of actual dimension to a pixel, from
- a maximum width of the trolley wire (4),
- a height from the line sensor (10) to the trolley wire (4),
- a focal length of the lens of the sensor (10),
- the width of the sensor (10) and
- the number of pixels of the sensor (10),
and that converts to a black region a white region in the line sensor image that has pixels that are greater than those corresponding to the maximum width of the trolley wire (4).

2. A trolley wire wear measuring device as claimed in Claim 1, **characterized by** further comprising means by which a pattern constituted by both the worn out portion of the trolley wire (4) and a rigid body portion sampled as a white region on the binary-coded line sensor image is previously registered as one unit and the worn out portion of the trolley wire (4) is identified from a position of the worn out portion of the trolley wire (4) that has been registered for each unit.

3. A trolley wire wear measuring device as claimed in Claim 2, **characterized by** further comprising means by which when the number of the white regions sampled from the binary-coded line sensor image is different from a multiple of the number of the units that have been previously registered, a threshold used in the discrimination analysis binary-coding processing is stepwisely readjusted.

4. A trolley wire wear measuring device as claimed in Claim 1, 2 or 3, **characterized by** further comprising a means by which the white regions sampled from the binary-coded line sensor image are entirely converted to the width of the worn out portion, the converted width of the worn out portion is compared with a previously registered detecting width of the rigid body portion, and based on the comparison results, the white regions having an worn out portion that closely corresponds to the rigid body detecting width is recognized as the rigid body portion and the width of the worn out portion on the white regions other than the white portions recognized as the rigid body portion is recognized as the width of the worn out portion of the trolley wire (4).

## Patentansprüche

1. Vorrichtung zum Messen des Verschleißes einer Oberleitung durch Bildverarbeitung, umfassend:
ein Mittel (20), das ein Zeilensensorbild erzeugt, in dem es einen Zeilensensor (10) verwendet, und das erzeugte Zeilensensorbild als Eingabebild speichert;
ein Mittel (50), das eine binär codierende Verarbeitung der Diskriminanzanalyse auf das Zeilensensorbild anwendet, um ein binär codiertes Zeilensensorbild zu erzeugen, bei dem eine weiße Region einen verschlissenen Abschnitt einer Oberleitung (4) darstellt und eine schwarze Region einen Hintergrund darstellt;
ein Mittel (61), das Rauschen aus dem binär codierten Zeilensensorbild löscht;
ein Mittel (70), das Ränder des verschlissenen Abschnitts der Oberleitung in dem binär codierten Zeilensensorbild, das dem Löschen von Rauschen unterzogen wurde, detektiert; und
ein Mittel (80; 81; 82; 83), das eine Distanz zwischen den Rändern des verschlissenen Abschnitts der Oberleitung (4) berechnet und die berechnete Distanz als eine Breite des verschlissenen Abschnitts der Oberleitung (4) bestimmt,
ferner ein Mittel (61) umfassend, das für jede Zeileneinheit, deren Bild analysiert werden soll, eine Bildauflösung, d.h. das Verhältnis einer tatsächlichen Dimension zu einem Pixel, berechnet aus
- einer maximalen Breite der Oberleitung (4),
- einer Höhe vom Zeilensensor (10) zur Oberleitung (4),
- einer Brennweite der Linse des Sensors (10),
- der Breite des Sensors (10) und
- der Anzahl der Pixel des Sensors (10),
und das eine weiße Region im Zeilensensorbild, die Pixel aufweist, die größer als diejenigen sind, welche der maximalen Breite der Oberleitung (4) entsprechen, in eine schwarze Region umwandelt.

2. Vorrichtung zum Messen des Verschleißes einer Oberleitung nach Anspruch 1,
**dadurch gekennzeichnet, dass** sie ferner ein Mittel umfasst, durch das ein Muster, das von sowohl dem verschlissenen Abschnitt der Oberleitung (4) als auch einem Abschnitt eines starren Körpers, der als eine weiße Region in dem binär codierten Zeilensensorbild abgetastet wird, gebildet wird, zuvor als eine Einheit registriert wird und der verschlissene Abschnitt der Oberleitung (4) aus einer Position des verschlissenen Abschnitts der Oberleitung (4) identifiziert wird, die für jede Einheit registriert wurde.

3. Vorrichtung zum Messen des Verschleißes einer Oberleitung nach Anspruch 2,
**dadurch gekennzeichnet, dass** sie ferner ein Mittel umfasst, durch das ein Schwellenwert, der bei der binär codierenden Verarbeitung der Diskriminanzanalyse verwendet wird, schrittweise neu eingestellt wird, wenn sich die Anzahl der weißen Regionen, die aus dem binär codierten Zeilensensorbild abgetastet werden, von einem Vielfachen der Anzahl der Einheiten unterscheidet, die zuvor registriert wurden.

4. Vorrichtung zum Messen des Verschleißes einer Oberleitung nach Anspruch 1, 2 oder 3,
**dadurch gekennzeichnet, dass**
sie ferner ein Mittel umfasst, durch das die weißen Regionen, die aus dem binär codierten Zeilensensorbild abgetastet werden, vollständig in die Breite des verschlissenen Abschnitts umgewandelt werden, die umgewandelte Breite des verschlissenen Abschnitts mit einer zuvor registrierten Detektionsbreite des Abschnitts des starren Körpers verglichen wird, und auf der Grundlage der Vergleichsergebnisse die weißen Regionen mit einem verschlissenen Abschnitt, welcher der Detektionsbreite des starren Körpers genau entspricht, als der Abschnitt des starren Körpers erkannt werden und die Breite des verschlissenen Abschnitts in den weißen Regionen, die sich von den weißen Abschnitten unterscheiden, die als der Abschnitt des starren Körpers erkannt wurden, als die Breite des verschlissenen Abschnitts der Oberleitung (4) erkannt wird.

## Revendications

1. Dispositif de mesure de l'usure d'un fil de caténaire par traitement d'image, comprenant :
un moyen (20) qui produit une image de capteur de ligne en utilisant un capteur de ligne (10) et en stockant l'image produite par le capteur de ligne à titre d'image d'entrée ;
un moyen (50) qui applique un traitement d'analyse de discrimination à codage binaire à l'image du capteur de ligne pour produire une image à codage binaire du capteur de ligne dans laquelle une région blanche représente une portion usée d'un fil de caténaire (4) et une région noire représente l'arrière-plan ;
un moyen (61) qui annule les bruits depuis l'image à codage binaire du capteur de ligne ;
un moyen (71) qui détecte les bords de la portion usée du fil de caténaire à partir de l'image à codage binaire du capteur de ligne qui a été soumise à l'annulation des bruits ; et
un moyen (80 ; 81 ; 82 ; 83) qui calcule une distance entre les bords de la portion usée du fil de caténaire (4) et qui détermine la distance calculée à titre de largeur de la portion usée du fil de caténaire (4),
comprenant en outre un moyen (61) qui calcule, pour chaque unité de ligne dont l'image doit être analysée, une résolution d'image, c'est-à-dire le rapport de la dimension actuelle à un pixel, à partir de
- une largeur maximum du fil de caténaire (4),
- une hauteur depuis le capteur de ligne (10) jusqu'au fil de caténaire (4),
- une longueur focale de la lentille du capteur (10),
- la largeur du capteur (10), et
- le nombre de pixels du capteur (10), et qui convertit en une région noire une région blanche dans l'image du capteur de ligne qui possède des pixels plus grands que ceux correspondant à la largeur maximum du fil de caténaire (4).

2. Dispositif de mesure de l'usure d'un fil de caténaire selon la revendication 1,
**caractérisé en ce qu'**il comprend en outre un moyen avec lequel un motif constitué à la fois par la portion usée du fil de caténaire (4) et par une portion de corps rigide échantillonnée comme une région blanche sur l'image à codage binaire du capteur de ligne est préalablement enregistré comme une unité, et la portion usée du fil de caténaire (4) est identifiée à partir d'une position de la portion usée du fil de caténaire (4) qui a été enregistrée pour chaque unité.

3. Dispositif de mesure de l'usure d'un fil de caténaire selon la revendication 2, **caractérisé en ce qu'**il comprend en outre un moyen avec lequel, quand le nombre des régions blanches échantillonnées à partir de l'image à codage binaire du capteur de ligne est différent d'un multiple du nombre des unités qui ont été préalablement enregistrées, un seuil utilisé dans le traitement d'analyse de discrimination à codage binaire est réajusté par pas.

4. Dispositif de mesure de l'usure d'un fil de caténaire selon la revendication 1, 2 ou 3, **caractérisé en ce qu'**il comprend en outre un moyen avec lequel les régions blanches échantillonnées à partir de l'image à codage binaire du capteur de ligne sont entièrement converties dans la largeur de la portion usée, la largeur convertie de la portion usée est comparée avec une largeur détectée préalablement enregistrée de la portion de corps rigide et, en se basant sur les résultats de comparaison, les régions blanches ayant une portion usée qui correspond étroitement à la largeur détectée du corps rigide sont reconnues comme étant la portion de corps rigide, et la largeur de la portion usée sur les régions blanches autres que les portions blanches reconnues comme étant la portion de corps rigide est reconnue comme étant la largeur de la portion usée du fil de caténaire (4).
